# EUROPEAN PATENT APPLICATION

(11) **EP 3 799 256 A1**
(43) Date of publication of application: **31.03.2021**
(21) Application number: 20742093.6
(22) Date of filing: 16.01.2020
(51) Int. Cl.: H02J 9/06

(54) **METHOD AND APPARATUS FOR RAPIDLY SWITCHING STATIC TRANSFER SWITCH, STORAGE MEDIUM, AND TERMINAL DEVICE**

(30) Priority: 18.01.2019 HK 19100978
(71) Applicant: Astrid Electronics HK Limited, Kowloon, Hong Kong (HK)
(72) Inventor: YU, Fei Chow, Hong Kong (HK)
(74) Representative: Izquierdo Blanco, Maria Alicia
(86) International application number: PCT/CN2020/072358
(87) International publication number: WO 2020/147765

(57) **Abstract**

The present application discloses a method, apparatus, storage medium and terminal equipment for switching static transfer switched quickly. The method comprises: detecting whether a duty power source or a standby power source satisfies a supply switching condition, wherein the duty power source and the standby power source are both connected to the load through at least two static transfer switches, and each switch is made by two SCRs or thyristors connected in antiparallel; when detecting that the duty power source or the standby power source satisfies a supply switching condition, stopping outputting a driving signal to the on-state switch which is transmitting power to the load, and detecting the voltage drop of the on-state switch; and when the voltage drop of the on-state switch is not within its voltage drop range of the on-state, outputting the driving signal to turn on the off-state switch, which is paired with the on-state switch. In this invention, the switch can be quickly and accurately switched, and short circuits between the two power sources can be avoided.

## Description

### TECHNICAL FIELD

The invention relates to the field of computer technology, and more particularly to a method, apparatus, storage medium and terminal equipment for switching static transfer switches quickly.

### BACKGROUND

Static Transfer Switch (STS) is an automatic transfer switch between two power sources. In normal operation, the duty power source powers for the output load. If the power quality of the duty power source is acceptable and the transfer criterion isn't satisfied, the duty power source is maintained to power for the output load. If the power quality of the duty power source becomes unacceptable or the transfer criteria is satisfied, the output critical load is going to be automatically transferred to the standby power source The transfer of load can also be performed through an external command.

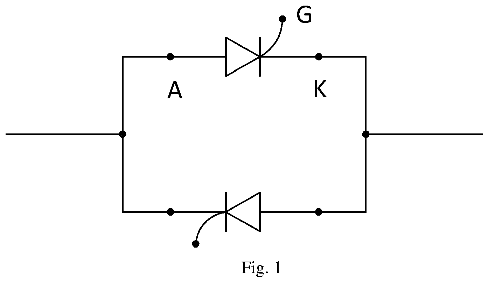

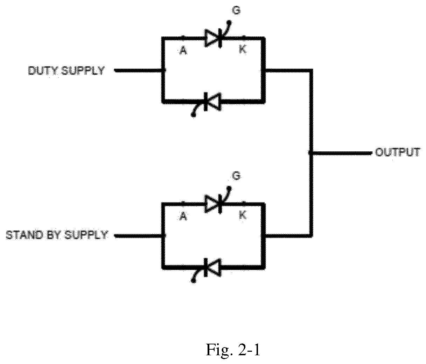

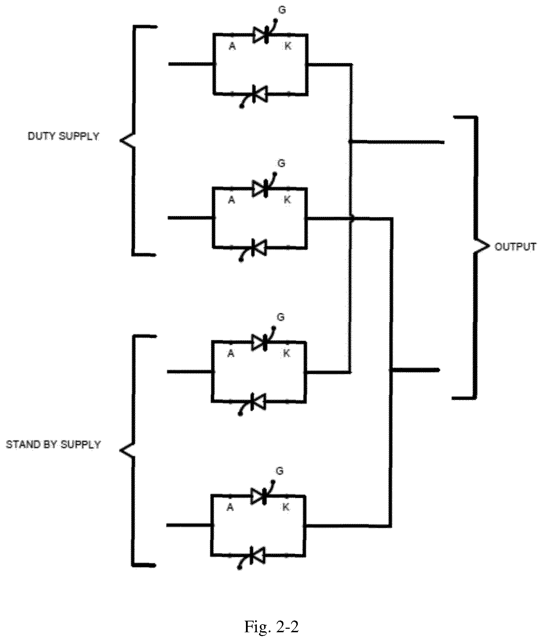

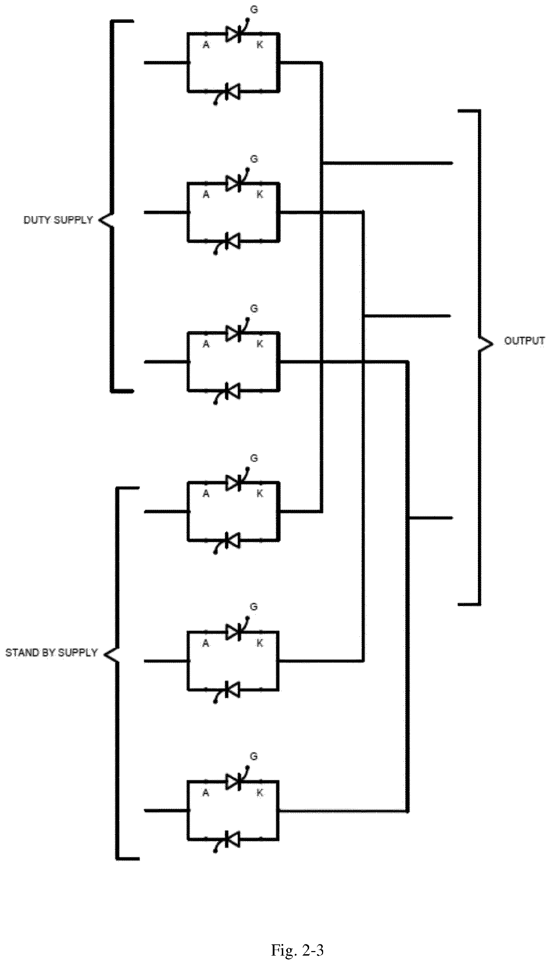

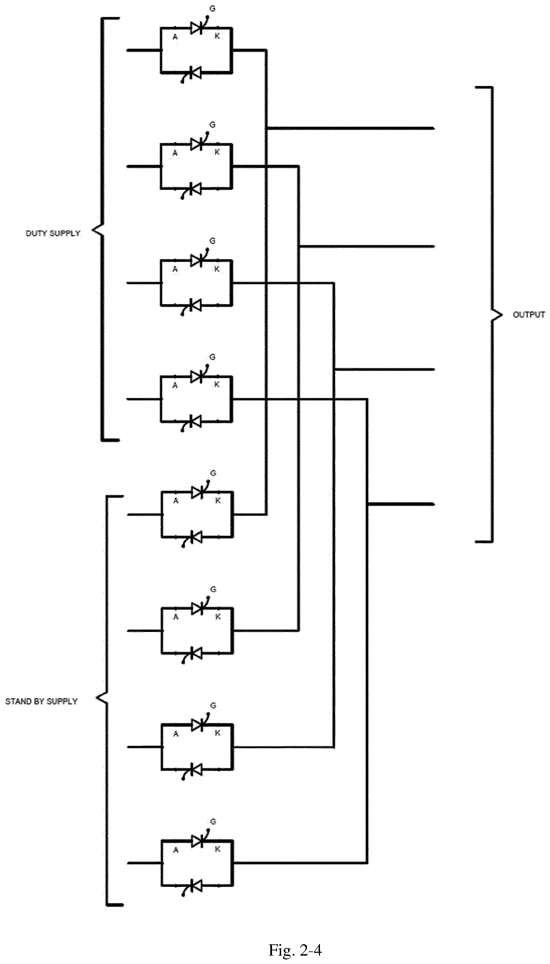

As indicated in Fig.1, STS is usually made by two SCRs (Silicon Controlled Rectifiers) connected in antiparallel. Wherein, A is the input terminal of the switch, K is the output terminal of the switch, and G is the gate control terminal of the switch. Depending on application, it can be built as a single-pole, double-pole, 3-pole, 4-pole or even more pole STS by using one or more STSs shown in Fig. 1. Fig.2-2 shows a single-pole STS. Fig.2-2 shows a double- pole STS. Fig.2-3 shows a 3-pole STS. Fig.2-4 shows a 4-pole STS. In these figures, DUTY SUPPLY is the duty power source, STAND BY SUPPLY is the standby power source, and OUT PUT is the terminal which can supply power for the load.

Traditional STS can only perform no break transfer when the two power sources are synchronized by using Make Before Break (MBB) mechanism. Such that the standby power source is switched on before the complete shutting off the duty power source, or the duty power source is switched on before the complete shutting off the standby power source. In such a way, there is no power interruption at the output of the Transfer Switch. When the two power sources are not synchronized, a delay is usually needed before switching on the standby power source to avoid a short circuit between two power sources having different potentials. This delay is usually set to be around 8-10ms to make sure the duty power source is completely shutting off before the switching on the standby power source. This mechanism is call Break Before Make (BBM) transfer. Some design claim that this delay time can be reduced to 5-6ms by certain algorithm or by detecting SCR holding current in order to confirm the turning off of duty switch. However, for SCR conducting hundreds and thousands of Amps, the holding current can be as low as 100mA. In most of the time, it is not applicable to detect such a low value holding current in high current application. It is below the level of electrical noises due to the detected current of electrical noise is generally around 100mA or above. While detecting the holding current, the detected current of the electrical noise is too close to the holding current, which confuses the detection of the holding current. There may be situations where the detected electrical noise is mistaken for the holding current. If the BBM mechanism is still implemented at this time, the power supply will be shut down, and the load device may stop working.

### SUMMARY

The invention herein provides a method, apparatus, storage medium and terminal equipment for switching static transfer switches quickly to solve or alleviate one or more technical problems in the prior art.

According to the first aspect of the invention, a method for switching static transfer switches quickly is provided, comprising: detecting whether a duty power source or a standby power source satisfies a supply switching condition, wherein the duty power source and the standby power source are both connected to the load through at least two static transfer switches, and each switch is made by two SCRs or thyristors connected in antiparallel; when detecting that the duty power source or the standby power source satisfies a supply switching condition, stopping outputting a driving signal to the on-state switch which is transmitting power to the load, and detecting the voltage drop of the on-state switch; and when the voltage drop of the on-state switch is not within its voltage drop range of the on-state, outputting the driving signal to turn on the off-state switch, which is paired with the on-state switch.

According to the second aspect of the invention, a circuit for switching static transfer switched is provided, comprising at least one switch group comprising two static transfer switches, each of which is made by two SCRs or thyristors connected in antiparallel; wherein a duty power source and a standby power source can be connected to a load in parallel by the two switches of the switch group; the control circuit comprises voltage detection terminals and driving signal terminals; the voltage detection terminals are respectively connected to the two ends of each switch, which is configured to detect the voltage drop between the anode and cathode of each SCR or thyristor of each switch; and the driving signal terminals are respectively connected to the gate of each SCR or thyristor of each switch for outputting a driving signal to turn on the switch.

According to the third aspect of the invention, an apparatus for switching static transfer switches, comprising: a detection module, which is configured to detect whether a duty power source or a standby power source satisfies a supply switching condition, wherein the duty power source and the standby power source are both connected to the load through at least two static transfer switches, and each switch is made by two SCRs or thyristors connected in antiparallel; a removal and voltage detection module, which is configured to stop outputting a driving signal to the on-state switch which is transmitting power to the load, and to detect the voltage drop of the on-state switch, when detecting that the duty power source or the standby power source satisfies a supply switching condition; and a power supply conduction module, which is configured to output the driving signal to turn on the off-state switch, which is paired with the on-state switch, when the voltage drop of the on-state switch is not within its voltage drop range of the on-state switch.

The functions of the apparatus can be realized by hardware, or by hardware executing corresponding software. The hardware or software includes one or more modules corresponding to the above-mentioned functions.

In a possible design, the structure for switching the static transfer switch includes a processor and a memory. The apparatus for switching the static transfer switches executes the above-mentioned program for switching the static transfer switch, and the processor is configured to execute the program stored in the memory. The device for switching static transfer switches may further include a communication interface, and the device for switching static transfer switches communicates with other equipment or a communication network.

According to the fourth aspect of the invention, a non-volatile computer-readable storage medium is provided, which is configured to store computer software instructions executed by the apparatus for switching the static transfer switches. The instructions comprise a program for executing the above-mentioned method for switching static transfer switches.

Any one of the above technical solutions has the following advantages or beneficial effects:
The embodiments of the invention confirm the on or off state of the switch by detecting the turn-on voltage of the switch, which can greatly reduce the delay time of switching the power source and avoid erroneous turn-off in the current detection process.

The above summary is only for the purpose of description and is not intended to be limiting in any way. In addition to the illustrative aspects, embodiments, and features described above, by referring to the drawings and the following detailed description, further aspects, embodiments, and features of the invention will be easily understood.

### BRIEF DESCRIPTION OF THE DRAWINGS

In the drawings, unless otherwise specified, the same reference numbers refer to the same or similar parts or elements throughout the multiple drawings. The drawings are not necessarily drawn to scale. It should be understood that these drawings only depict some embodiments disclosed according to the invention herein, and should not be regarded as limiting the scope of the present invention.
Fig. 1 is a schematic diagram of a static transfer switch according to an embodiment of the invention;
Fig. 2A is a schematic diagram of a unipolar static transfer switch according to an embodiment of the invention;
Fig. 2B is a schematic diagram of a bipolar static transfer switch according to an embodiment of the invention;
Fig. 2C is a schematic diagram of a three-pole static transfer according to an embodiment of s the invention;
Fig. 2D is a schematic diagrams of a four-pole static transfer according to an embodiment of the invention;
Fig. 3 is a schematic flowchart of a method for switching static transfer switches according to an embodiment of the invention;
Fig. 4 is a schematic diagram of a circuit for switching static transfer switches according to an embodiment of the invention;
Fig. 5 is a schematic structural diagram of an apparatus for switching static transfer switches according to an embodiment of the invention;
Fig. 6 is a schematic structural diagram of a terminal device according to an embodiment of the invention.

### DETAILED DESCRIPTION OF EMBODIMENTS

In the following, only certain exemplary embodiments are briefly described. As those skilled in the art can realize, the described embodiments may be modified in various different ways without departing from the spirit or scope of the invention herein. Therefore, the drawings and description are to be regarded as illustrative in nature and not restrictive.

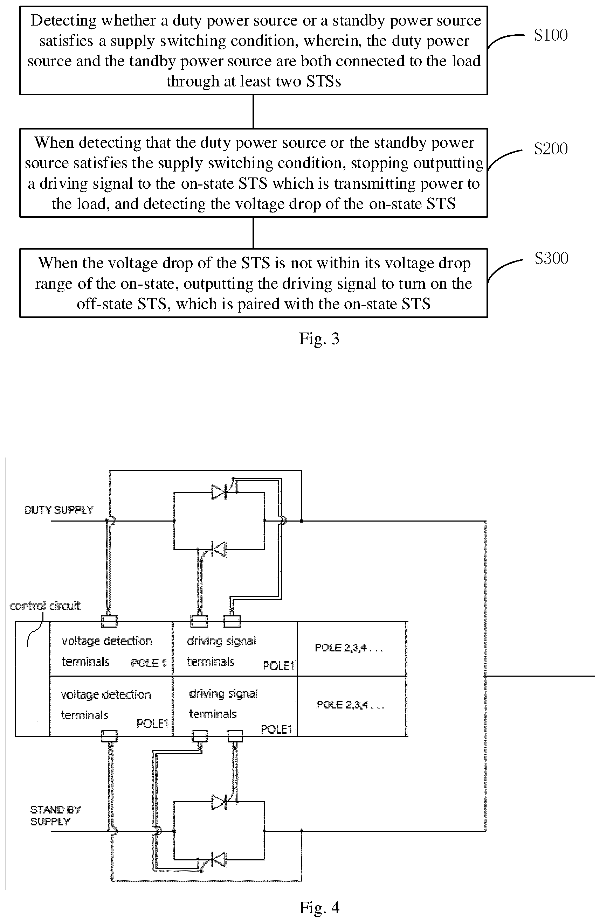

Referring to Fig. 3, an embodiment of the invention provides a method for switching static transfer switches. This embodiment can be executed by a circuit to control the power switch. This embodiment includes step S100 to step S400, which are specifically as follows:
S100: Detecting whether a duty power source or a standby power source satisfies a supply switching condition, wherein, the duty power source and the tandby power source are both connected to the load through at least two STSs.

As shown in Figs. 2A to 2D, if the static transfer switch system includes a set of STS, when power is supplied to the load, only one STS is in the conducting state, this system can be called a unipolar STS. If the system includes two sets of STSs, when power is supplied to the load, at most two STSs are in the conducting state, this system can be called a bipolar STS. If the system includes three groups of STSs, when power is supplied to the load, there are at most three STSs in the conducting state, this system can be called a three-pole STS. Other more poles STS can be deduced by analogy. Therefore, this embodiment can be applied to multiple groups of STSs.

One of the two STSs is connected to the duty power source, and the other is connected to the standby power source.
the supply switching conditions may include:
1. When the power quality of the current power supply to load (the current power can be the duty power source or the standby power source) becomes unacceptable, or the transfer criteria is satisfied.
2. External commands are received to switch the duty power source to the standby power source or switch the standby power source to the duty power source.

S200: When detecting that the duty power source or the standby power source satisfies the supply switching condition, stopping outputting a driving signal to the on-state STS which is transmitting power to the load, and detecting the voltage drop of the on-state STS.

S300: When the voltage drop of the STS is not within its voltage drop range of the on-state, outputting the driving signal to turn on the off-state STS, which is paired with the on-state STS.

Optionally, the duty power source and the standby power source are alternating current. When the phases of the two power sources are different, the levels of the working power source and the standby power source at the same time are usually different. Then, if the mechanism of Make Before Break (MBB) is used for switching the power supply, a short circuit will occur. In this embodiment, in order to avoid a short circuit between the two power supplies, a mechanism of Break Before Make (BBM) is adopted. That is, first disconnect the current power supply, and then start the standby power supply.

In this embodiment, the on or off state of the SCR or thyristor is controlled by removing or providing a driving signal for the gate of the SCR or thyristor. When it is detected that the duty power source or the standby power source satifies the supply switching condition, the command can be received by the circuit to remove the driving signal, which is used to drive the SCR or thyristor to transfer power to the load. For example, if the duty power source is supplying power to the load, the driving signal is removed from the triac which is connected to this duty power source. If the standby power source is supplying power to the load, the driving signal is removed from the STS which is connnected to this standby power source. Due to the semiconductor characteristics of the PN-PN junction of the SCR or thyristor of the STS, when it is turned on and the power supply still outputs current, even if the drive signal is removed, the PN-PN junction cannot be immediately cut off (turn off). When the current flow of the PN-PN junction stops, the SCR or thyristor is turned off. And the voltage drop of the SCR or thyristor is no longer in its on-state voltage drop range. Therefore, by detecting the voltage drop of the SCR or thyristor, it can be accurately judged whether the SCR or thyristor is turned off. Once it is detected that the STS powering to the load is turned off, it immediately outputs a driving signal to the paired STS to make it in a conducting state, which can ensure that there is continuous power supply for the load and no power interruption at the output of the tranfer switch. Moreover, the short circuit of the two power supplies can be avoided by adopting the mechanism of Break Before Make.

For SCRs or thyristors with different values, the voltage drop range of the on-state is the same, usually between 0.8V and 2.5V, due to they all have PN-PN junction structures. Therefore, this embodiment is applicable to all static transfer switches (STSs).

Once the detected voltage drop is not within the range of 0.8V to 2.5V, the STS can be confirmed to be turned off, and the other STS that is paired with it can be turned on immediately. Thus, it can be considered that there is no delay between these two operations. Even if there is, the delay is within microseconds. The control circuit can complete the switching of thees switches within one millisecond to ensure that there is continuous power supply for the load. That is there is no power interruption at the output of the transfer switch.

Referring to Fig. 4, an embodiment of the invention provides a circuit for switching static transfer switches, which includes a control circuit CONTROL CIRCUIT and at least one switch group. Each group comprising two static transfer switches, and each switch is made by two SCRs or thyristors connected in antiparalle.

Taking a switch group as an example, a duty power source and a standby power source can be connected to a load in parallel by the two switches of the switch group The connection relationship of other groups with the two power source can be deduced by analogy.

The control circuit includes multiple sets of voltage detection terminals and driving signal terminals. Any group of terminals can be used to connect with a group of triac groups. A set of voltage detection terminals and driving signal terminals includes two voltage detection terminals and four driving signal terminals. The two voltage detection terminals respectively detect the voltage drop of two STSs, which are respectively connected to the duty power source and the standby power source. Specifically, one voltage detection terminal is respectively connected with the two end of one STS. That is, the voltage drop between the anode end and the cathode of the SCR of the STS can be detected. The four driving signal terminals are respectively connected with the four gates of the four SCRs in the switch group, and output driving signals to drive STSs to work.

Taking Fig. 4 as an example, whenever the static transfer switch satisfies the switching conditions for switching from the duty power source to the standby power source, the control circuit can remove the driving signal appling on each pole (POLE1, 2, 3, 4···) connected to the duty power source, so that it can turn off the STSs. But the removal of the driving signal cannot immediately turn off the STS, due to the characteristics of the PN-PN junction of the SCR. When no more current flows in the SCR, that is, when the current drops to a certain threshold, the SCR is turned off. Meanwhile, the voltage drop at both ends of the SCR(the anode and cathode of the SCR) no longer maintains the on-state voltage. After the driving signal acting on the STS is removed, the control circuit continuously detects the voltage drop of the STS to confirm whethere it is turned off. Then, once it is confirmed that the STS is turned off, a drive signal is sent to the STS connected to the standby power source to enable this STS to supply power to the load. The continuous current flow at the load is assured and the short circuit between the two power sources can be avoided.

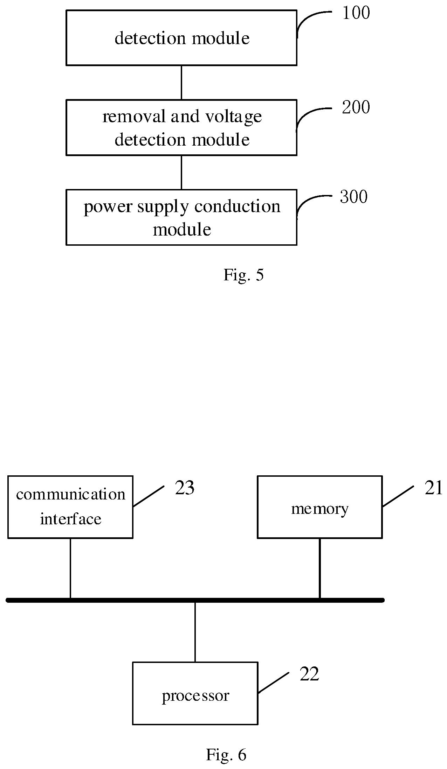

Referring to Fig. 5, an embodiment of the present invention provides an apparatus for switching static transfer switches, including a detection module, a removal and voltage detection module and a power supply conduction module.

The detection module 100 is used to detect whether the duty power source or the standby power source satisfies a supply switching condition, wherein the duty power source and the standby power source are both connected to the load through at least two static transfer switches, and each switch is made by two SCRs or thyristors connected in antiparallel; and the removal and voltage detection module 200 is configured to stop outputting a driving signal to the on-state switch which is transmitting power to the load, and to detect the voltage drop of the on-state switch, when detecting that the duty power source or the standby power source satisfies a supply switching condition; and the power supply conduction module 300 is configured to output the driving signal to turn on the off-state switch, which is paired with the on-state switch, when the voltage drop of the on-state switch is not within its voltage drop range of the on-state switch.

In a possible implementation manner, the voltage drop range of the on-state is 0.8V to 2.5V.

In a possible implementation, there are multiple switch groups, and each group comprises two static transfer switches.

The functions of the apparatus can be realized by hardware, or by hardware executing corresponding software. The hardware or software includes one or more modules corresponding to the above-mentioned functions.

In a possible design, the structure for switching the static transfer switch includes a processor and a memory. The memory is configured to store the above-mentioned program executed by the apparatus for switching the static transfer switches, and the processor is configured to execute the program stored in the memory. The device for switching static transfer switches may further include a communication interface, and the device for switching static transfer switches communicates with other equipment or a communication network.

The embodiment of the invention also provides a terminal device for switching static transfer switches. As shown in FIG. 6, the device includes a memory 21 and a processor 22, and the memory 21 stores a computer program that can be run on the processor 22. When the processor 22 executes the computer program, the method for switching static transfer switches in any one of the foregoing embodiments is implemented. The number of the memory 21 and the processor 22 may be one or more.

The equipment also includes: a communication interface 23, which is used for communication between the processor 22 and external devices.

The memory 21 may include a high-speed RAM memory, and may also include a non-volatile memory, for example, at least one magnetic disk memory.

If the memory 21, the processor 22, and the communication interface 23 are implemented independently, the memory 21, the processor 22, and the communication interface 23 can be connected to each other through a bus and complete mutual communication. The bus can be an industry standard architecture (ISA, Industry Standard Architecture) bus, a peripheral device interconnection (PCI, Peripheral Component) bus, or an extended industry standard architecture (EISA, Extended Industry Standard Component) bus, etc. The bus can be divided into address bus, data bus, control bus, etc. For ease of presentation, only one thick line is used in FIG. 6, but it does not mean that there is only one bus or one type of bus.

Optionally, in specific implementation, if the memory 21, the processor 22, and the communication interface 23 are integrated on one chip, the memory 21, the processor 22, and the communication interface 23 can communicate with each other through internal interfaces.

In the description of this specification, descriptions with reference to the terms "one embodiment", "some embodiments", "examples", "specific examples", or "some examples" etc. mean specific features described in conjunction with the embodiment or example , Structure, materials or features are included in at least one embodiment or example of the present invention. Moreover, the described specific features, structures, materials or characteristics can be combined in any one or more embodiments or examples in a suitable manner. In addition, those skilled in the art can combine and combine the different embodiments or examples and the features of the different embodiments or examples described in this specification without mutual contradiction.

In addition, the terms "first" and "second" are only used for descriptive purposes, and cannot be understood as indicating or implying relative importance or implicitly indicating the number of indicated technical features. Thus, the features defined with "first" and "second" may explicitly or implicitly include at least one of the features. In the description of the present invention, "plurality" means two or more than two, unless specifically defined otherwise.

Any process or method description in the flowchart or described in other ways herein can be understood as a module, segment or part of code that includes one or more executable instructions for implementing specific logical functions or steps of the process , And the scope of the preferred embodiment of the present invention includes additional implementations, which may not be in the order shown or discussed, including performing functions in a substantially simultaneous manner or in reverse order according to the functions involved. It is understood by those skilled in the art to which the embodiments of the present invention belong.

The logic and/or steps represented in the flowchart or described in other ways herein, for example, can be considered as a sequenced list of executable instructions for implementing logic functions, and can be embodied in any computer-readable medium, For use by instruction execution systems, devices, or equipment (such as computer-based systems, systems including processors, or other systems that can fetch and execute instructions from instruction execution systems, devices, or equipment), or combine these instruction execution systems, devices Or equipment. For the purposes of this specification, a "computer-readable medium" can be any device that can contain, store, communicate, propagate, or transmit a program for use by an instruction execution system, device, or device or in combination with these instruction execution systems, devices, or devices.

The computer-readable medium of the embodiment of the present invention may be a computer-readable signal medium or a computer-readable storage medium, or any combination of the two. More specific examples of computer-readable storage media include at least (non-exhaustive list) the following: electrical connections (electronic devices) with one or more wiring, portable computer disk cases (magnetic devices), random access memory (RAM), read-only memory (ROM), erasable and editable read-only memory (EPROM or flash memory), fiber optic devices, and portable read-only memory (CDROM). In addition, the computer-readable storage medium can even be paper or other suitable media on which the program can be printed, because it can be done, for example, by optically scanning the paper or other media, and then editing, interpreting, or other suitable methods when necessary. Process to obtain the program electronically and then store it in the computer memory.

In the embodiment of the present invention, a computer-readable signal medium may include a data signal propagated in a baseband or as a part of a carrier wave, and a computer-readable program code is carried therein. This propagated data signal can take many forms, including but not limited to electromagnetic signals, optical signals, or any suitable combination of the foregoing. The computer-readable signal medium may also be any computer-readable medium other than a computer-readable storage medium. The computer-readable medium may send, propagate, or transmit a program for use in an instruction execution system, input method, or device or in combination with it . The program code contained on the computer-readable medium can be transmitted by any suitable medium, including but not limited to: wireless, wire, optical cable, radio frequency (RF), etc., or any suitable combination of the foregoing.

It should be understood that each part of the present invention can be implemented by hardware, software, firmware or a combination thereof. In the above embodiments, multiple steps or methods can be implemented by software or firmware stored in a memory and executed by a suitable instruction execution system. For example, if it is implemented by hardware, as in another embodiment, it can be implemented by any one or a combination of the following technologies known in the art: a logic gate circuit for implementing logic functions on data signals Discrete logic circuits, application-specific integrated circuits with suitable combinational logic gates, programmable gate array (PGA), field programmable gate array (FPGA), etc.

A person of ordinary skill in the art can understand that all or part of the steps carried in the method of the above-mentioned embodiments can be implemented by a program instructing related hardware to complete the program. The program can be stored in a computer-readable storage medium. When executed, it includes one of the steps of the method embodiment or a combination thereof.

In addition, the functional units in the various embodiments of the present invention may be integrated into one processing module, or each unit may exist alone physically, or two or more units may be integrated into one module. The above-mentioned integrated modules can be implemented in the form of hardware or software functional modules. If the integrated module is implemented in the form of a software function module and sold or used as an independent product, it can also be stored in a computer-readable storage medium. The storage medium can be a read-only memory, a magnetic disk or an optical disk, etc.

The above are only specific embodiments of the present invention, but the protection scope of the present invention is not limited thereto. Any person skilled in the art can easily think of various changes or substitutions within the technical scope disclosed by the present invention. These should be covered within the protection scope of the present invention. Therefore, the protection scope of the present invention should be subject to the protection scope of the claims.

## Claims

1. A method for switching static transfer switches, comprising:
detecting whether a duty power source or a standby power source satisfies a supply switching condition, wherein the duty power source and the standby power source are both connected to the load through at least two static transfer switches, and each switch is made by two SCRs or thyristors connected in antiparallel;
when detecting that the duty power source or the standby power source satisfies a supply switching condition, stopping outputting a driving signal to the on-state switch which is transmitting power to the load, and detecting the voltage drop of the on-state switch; and
when the voltage drop of the on-state switch is not within its voltage drop range of the on-state, outputting the driving signal to turn on the off-state switch, which is paired with the on-state switch.

2. The method according to claim 1, wherein the voltage drop range of the on-state is 0.8V to 2.5V.

3. The method according to claim 1, wherein there are multiple switch groups and each group comprises two static transfer switches.

4. A circuit for switching static transfer switches, comprising:
a control circuit; and
at least one switch group comprising two static transfer switches, each of which is made by two SCRs or thyristors connected in antiparallel;
wherein a duty power source and a standby power source can be connected to a load in parallel by the two switches of the switch group;
the control circuit comprises voltage detection terminals and driving signal terminals;
the voltage detection terminals are respectively connected to the two ends of each switch, which is configured to detect the voltage drop between the anode and cathode of each SCR or thyristor of each switch; and
the driving signal terminals are respectively connected to the gate of each SCR or thyristor of each switch for outputting a driving signal to turn on the switch.

5. An apparatus for switching static transfer switches, comprising:
a detection module, which is configured to detect whether a duty power source or a standby power source satisfies a supply switching condition, wherein the duty power source and the standby power source are both connected to the load through at least two static transfer switches, and each switch is made by two SCRs or thyristors connected in antiparallel;
a removal and voltage detection module, which is configured to stop outputting a driving signal to the on-state switch which is transmitting power to the load, and to detect the voltage drop of the on-state switch, when detecting that the duty power source or the standby power source satisfies a supply switching condition; and
a power supply conduction module, which is configured to output the driving signal to turn on the off-state switch, which is paired with the on-state switch, when the voltage drop of the on-state switch is not within its voltage drop range of the on-state switch.

6. The apparatus according to claim 5, wherein the voltage drop range of the on-state is 0.8V to 2.5V.

7. The device according to claim 5, wherein there are multiple switch groups and each group comprises two static transfer switches.

8. A terminal device for switching static transfer switches, comprising:
one or more processors; and
a storage device for storing one or more programs;
wherein when the one or more programs are executed by the one or more processors, the one or more processors are caused to implement the method for switching static transfer switches according to any one of claims 1-3.

9. A non-volatile computer-readable storage medium storing a computer program, wherein when the program is executed by a processor, the method for switching static transfer switches according to any one of claims 1-3 is performed.
